(19) **Europäisches Patentamt**
**European Patent Office**
**Office européen des brevets**

(11) **EP 2 323 244 B1**

(12) **EUROPEAN PATENT SPECIFICATION**

(45) Date of publication and mention
of the grant of the patent:
**14.10.2015  Bulletin 2015/42**

(51) Int Cl.:
*H02M 1/08* (2006.01)    *H02M 1/44* (2007.01)

(21) Application number: **10190853.1**

(22) Date of filing: **11.11.2010**

(54) **Switching mode power supply with spectrum shaping circuit and control method thereof**

Schaltstromversorgung mit Spektrumsbildung und Verfahren dafür

Alimentation électrique à découpage avec circuit de mise en forme de spectre et procédé de contrôle correspondant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2009  CN 200910309569**

(43) Date of publication of application:
**18.05.2011  Bulletin 2011/20**

(73) Proprietor: **Monolithic Power Systems, Inc.
San Jose, CA 95120-5000 (US)**

(72) Inventors:
• **Li, En
310012 Hangzhou (CN)**

• **Zhang, Junming
310012 Hangzhou (CN)**
• **Ren, Yuancheng
310012 Hangzhou (CN)**

(74) Representative: **Leach, James
Mewburn Ellis LLP
City Tower
40 Basinghall Street
London EC2V 5DE (GB)**

(56) References cited:
**US-A1- 2005 110 473    US-A1- 2007 133 234
US-A1- 2008 224 678    US-A1- 2008 309 303
US-B1- 6 204 649**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This application claims priority to and the benefit of Chinese Patent Application No. 200910309569.5, filed November 11, 2009, which is incorporated herein by reference in its entirety.

The technology described in this patent document relates generally to switching mode power supplies.

Switching mode power supplies are used in various applications. In order to get small volume and high efficiency, the switching frequency of the switching mode power supplies are generally rather high, e.g. tens of thousands hertz. However, such high switching frequency may cause severe electro magnetic interference (EMI), which decreases electrical quality, influences electronic equipments around switching mode power supplies, interferes to radio wave, etc. As a result, strict EMI standards have been adopted in many/most countries.

In order to reduce EMI, some prior art switching mode power supplies distribute the energy in a small switching frequency range to a broad switching frequency range by varying or modulating the switching frequency within a first and a second frequency band, or in other words, within a spectrum shaping range. However, the spectrum of such switching mode power supply is fixed, which is not suitable for switching mode power supplies with variable switching frequency.

So generally there is a need to provide an improved switching mode power supply, which regulates the spectrum shaping range according to the switching frequency.

US20080309303A1 discloses a switching power supply that enables a reduction in noise without the need for an anti-noise component such as a filter circuit. A secondary current on period detecting circuit detects a first period during which a secondary current flows, the secondary current starting to flow through a secondary winding after a switching element is turned off. A secondary current on duty control circuit oscillates a clock signal set turning on the switching element so as to maintain, at a constant value, an on duty ratio of the first period to a third period made up of the first period and a second period during which the secondary current does not flow. A secondary current on duty modulating circuit applies a modulation component to the on duty ratio to periodically modulate the on duty ratio and thus the oscillation frequency of the switching element.

US20070133234A1 discloses a primary side controlled power converter having a voltage sensing means coupled to a transformer of the power converter and configured to provide a voltage feedback waveform representative of an output of the transformer is provided. A primary switching circuit operates to control energy storage of a primary side of the transformer. The primary switching circuit is operable during an on time and inoperable during an off time. The on and off time is switched at a system frequency. A feedback amplifier generates an error signal indicative of a difference between the voltage feedback waveform and a reference voltage. A sample and hold circuit samples the error signal at a periodic frequency during the off time. An error signal amplifier is configured to provide the sampled value to the primary switching circuit wherein the primary switching circuit controls the transformer and thereby regulates an output of the power converter.

US20080224678A1 discloses a controller for a multi-phase switching power supply which shuffles the sequence of the phases in response to a load transient to prevent synchronization of one or more phases with high-frequency load transients. The sequence may be shuffled by varying the frequency and/or sequence of the switching control signals to introduce a random variation in the phases.

US20050110473A1 discloses a switching signal modulation circuit including a switching control circuit having an ON time control terminal and an OFF time control terminal, the switching control circuit capable of adjusting respectively separately ON time and OFF time of a switching signal using values of resistors externally attached respectively to the ON time control terminal and the OFF time control terminal; a spread signal generating circuit operable to output a spread signal; an ON time setting resistor connected between the ground and the ON time control terminal of the switching control circuit; an OFF time setting resistor connected between the ground and the OFF time control terminal of the switching control circuit; a first weight resistor operable to vary the frequency and the duty of the switching signal, the first weight resistor connected between an output of the spread signal generating circuit and the ON time control terminal of the switching control circuit; and a second weight resistor operable to vary the frequency and the duty of the switching signal, the second weight resistor connected between the output of the spread signal generating circuit and the OFF time control terminal of the switching control circuit.

US6204649B1 discloses a switching regulator for reducing electromagnetic interference (EMI) and including a PWM controller which incorporates a varying frequency oscillator for controlling the operating frequency of the switching regulator. The varying frequency oscillator provides an oscillating signal having a continuously varying frequency about the center switching frequency of the switching regulator. The varying frequency oscillating signal causes the operating frequency of the switching regulator to vary, spreading out the EMI noise generated by the switching regulator and effectively reducing the peak energy of the EMI noise.

Preferably, it is an object of the present invention to provide an improved switching mode power supply. In accomplishing the above and other objects, there may be provided, preferably in accordance with an embodiment of the present invention, a switching mode power supply, comprising: a transformer having a primary winding and a secondary winding to supply power to a load; a feedback circuit that generates a feedback signal that varies in relation to the load on the secondary winding; a switching circuit coupled to the primary winding to control current flow through the primary winding; a control circuit coupled to the switching circuit to control the on/off status of switching circuit in response to the feedback signal and the current flow through the primary winding; wherein the control circuit comprises a spectrum shaping circuit, which generates a spectrum shaping signal in response to the feedback signal, so as to regulate the switching frequency and the spectrum shaping range. In addition, there may be provided, preferably in accordance with an embodiment of the present invention, a method used in a switching mode power supply, comprising: step 1, coupling a switching circuit to a primary winding of a transformer, so as to store energy when the switching circuit is turned on, and release the energy stored to a secondary winding of the transformer when the switching circuit is turned off; step 2, sensing the current flow through the primary winding of the transformer, for generating a current sensing signal; step 3, sensing the output voltage, to generating a feedback signal which is related to the output voltage; step 4, controlling the switch circuit to be on/off in response to the current sensing signal and the feedback signal; step 5, regulating the switching frequency and spectrum shaping range of the switching mode power supply in response to the feedback signal.

The present invention provides a switching mode power supply as set out in claim 1. Further aspects of the present invention are set out in the remaining claims.

BRIEF DESCRIPTION OF THE DRAWINGS

Figure 1 is a schematic circuit of a switching mode power supply 100 preferably in accordance with an embodiment of the present invention.

Figure 2 is a schematic circuit of a switching mode power supply 100' preferably in accordance with another embodiment of the present invention.

Figure 3a and Figure 3b illustrate a schematic circuit of a switching mode power supply 200 preferably in accordance with another embodiment of the present invention.

Figure 3c illustrates a schematic circuit 220 of a control chip $IC_1$ in the switching mode power supply 200 preferably in accordance with yet another embodiment of the present invention.

Figure 3d illustrates a schematic circuit 230 of the control chip $IC_1$ in the switching mode power supply 200 preferably in accordance with yet another embodiment of the present invention.

Figure 4 illustrates a triangular waveform provided by a spectrum shaping circuit 207 in the switching mode power supply 200 preferably in accordance with yet another embodiment of the present invention.

Figure 5 illustrates waveforms of control signal, the output signals of the spectrum shaping circuit 207 and a clock generator 205 in the switching mode power supply 200 preferably in accordance with yet another embodiment of the present invention.

Figure 6 illustrates a flowchart 600 preferably in accordance with yet another embodiment of the present invention.

Embodiments of circuits and methods for a switching mode power supply are described in detail herein. In the following description, some specific details, such as example circuits for these circuit components, are included to provide a thorough understanding of embodiments of the invention. One skilled in relevant art will recognize, however, that the invention can be practiced without one or more specific details, or with other methods, components, materials, etc.

The following embodiments and aspects are illustrated in conjunction with circuits and methods that are meant to be exemplary and illustrative. In various embodiments, the above problem has been reduced or eliminated, while other embodiments are directed to other improvements.

The present invention relates to circuits and methods of switching mode power supply applications. The switching frequency and the spectrum shaping range of the switching mode power supply are regulated based on a feedback signal.

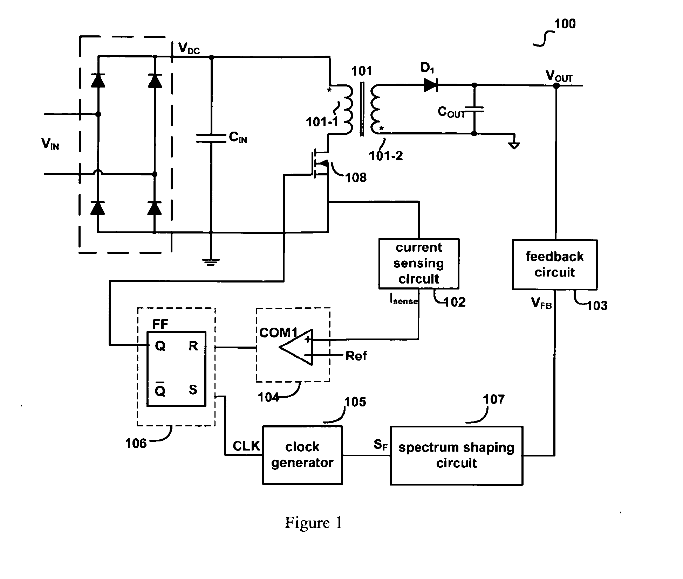

Figure 1 is a schematic circuit of a switching mode power supply 100 in accordance with an embodiment of the present invention. In one embodiment, the switching mode power supply 100 adopts a flyback converter. The switching mode power supply 100 includes a rectifier bridge, a transformer 101, a current sensing circuit 102, a feedback circuit 103, a comparison circuit 104, a clock generator 105, a logical circuit 106, a spectrum shaping circuit 107, and a switching circuit 108. The transformer 101, in one embodiment, includes a primary winding 101-1 and a secondary winding 101-2. The switching circuit 108, in one embodiment, may be any controllable semiconductor switch device, such as MOSFET, IGBT, BJT, etc. In one embodiment, the switching mode power supply 100 further includes an input capacitor ($C_{IN}$) coupled across the rectifier bridge, a diode ($D_1$) coupled in series with the secondary winding 101-2 of the transformer 101, and an output capacitor ($C_{OUT}$) coupled between the output port of the switching mode power supply 100 and ground. In operation, the rectifier bridge receives an AC input signal ($V_{IN}$), and converts it into a DC signal received by the primary winding 101-1 of the transformer 101. The transformer 101 is controlled to generate a DC output voltage ($V_{OUT}$) on the secondary winding 101-2 of the transformer 101 by controlling the switching circuit 108 to be on and off, alternately.

In one embodiment, the current sensing circuit 102 is coupled to the switching circuit 108, for sensing the current flow through the switching circuit 108, and generating a current sensing signal $I_{sense}$ based thereupon. In one embodiment, the current sensing circuit 102 may comprise a resistor, or a transformer, or a current amplifier, etc.

In one embodiment, the feedback circuit 103 is coupled to the output port of the switching mode power supply 100, for generating a feedback signal ($V_{FB}$) which is related to the output voltage ($V_{OUT}$). In one embodiment, the feedback circuit 103 includes an opto-coupler or a transformer. In one embodiment, the feedback circuit 103 is a resistor-divided circuit or a capacitor-divided circuit.

In one embodiment, the comparison circuit 104 receives the current sensing signal ($I_{sense}$) at one input terminal, and receives a reference signal ($R_{ef}$) at the other input terminal. The comparison circuit 104 compares the current sensing signal ($I_{sense}$) with the reference signal ($R_{ef}$), and provides a comparison signal based thereupon.

In one embodiment, the spectrum shaping circuit 107 is coupled to the output of the feedback circuit 103, for receiving the feedback signal ($V_{FB}$) and providing a spectrum shaping signal ($S_F$).

In one embodiment, the clock generating circuit 105 is coupled to the output of the spectrum shaping circuit 107, for receiving the spectrum shaping signal ($S_F$) and providing a clock signal (CLK) based thereupon.

In one embodiment, one input terminal of the logical circuit 106 is coupled to the output of the comparison circuit 104, for receiving the comparison signal; the other input terminal of the logical circuit 106 is coupled to the output of the clock generating circuit 105, for receiving the clock signal (CLK). The logical circuit 106 provides a control signal which is used to control the on/off of the switching circuit 108 in response to the comparison signal and the clock signal. In one embodiment, the switching circuit 108 is turned on when a rising edge of the clock signal (CLK) arrives, and is turned off when the current sense signal is higher than the reference signal ($R_{ef}$). However, that in other embodiment, the switching circuit 108 may be turned on/off under other conditions.

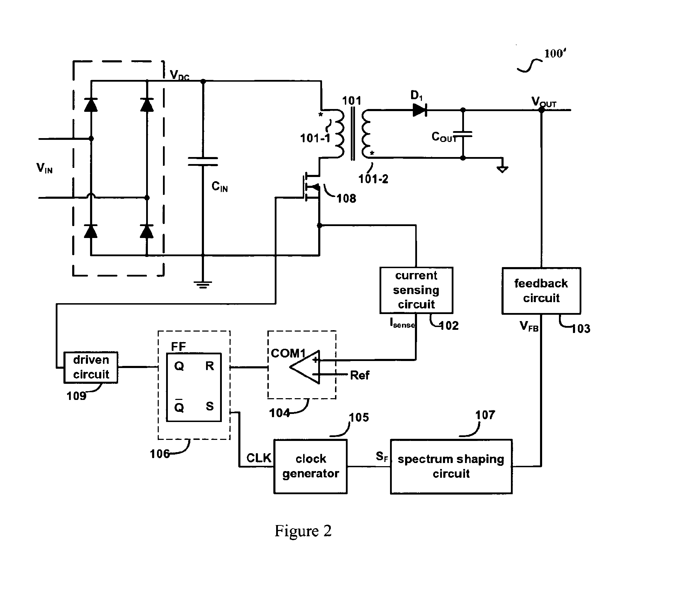

In one embodiment, there is a driven circuit 109 coupled between the logical circuit 106 and the switching circuit 108 for improving driven ability, as illustrated in a switching mode power supply 100' of Figure 2.

As illustrated hereinbefore, the current sensing circuit 102, the comparison circuit 104, the clock generator 105, the logical circuit 106, and the spectrum shaping circuit 107 constitutes a control circuit, which controls the on/off of the switching circuit 108, so as to control the power delivered to the secondary winding 101-2 of the transformer 101.

In one embodiment, the switching circuit 108 comprises a n-channel MOSFET, the comparison circuit 104 comprises a comparator (COM1), and the logical circuit 106 comprises a flip-flop (FF). The non-inventing input terminal of the comparator (COM1) is coupled to receive the current sensing signal ($I_{sense}$), the inverting input terminal of the comparator (COM1) is coupled to receive the reference signal ($R_{ef}$). The flip-flop (FF) comprises a set terminal (S) and a reset terminal (R). The reset terminal (R) of the flip-flop (FF) is coupled to the output terminal of the comparator (COM1) for receiving the comparison signal, while the set terminal (S) of the flip-flop (FF) is coupled to the clock generator 105 for receiving the clock signal (CLK). The feedback circuit 103 is coupled to the output port of the switching mode power supply 100 for generating the feedback signal ($V_{FB}$) related to the output voltage ($V_{OUT}$). The input terminal of the spectrum shaping circuit 107 is coupled to the output of the feedback circuit 103 for receiving the feedback signal ($V_{FB}$), and providing the spectrum shaping signal ($S_F$) to the clock generator 105, so that the clock generator 105 regulates the switching frequency and the spectrum shaping range accordingly. In one embodiment, the higher the frequency is, the broader the spectrum shaping range is.

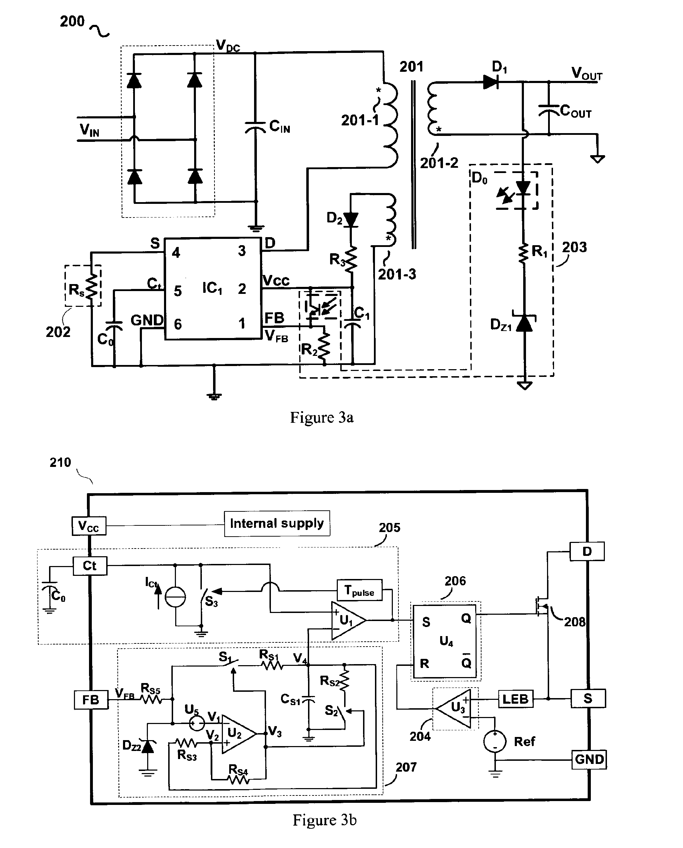

Figure 3a and Figure 3b illustrate a schematic circuit of a switching mode power supply 200 in accordance with another embodiment of the present invention, wherein Figure 3b shows a detailed block diagram of the control chip ($I_{C1}$) in Figure 3a. The switching mode power supply 200 comprises a rectifier bridge, a transformer 201, a current sensing circuit 202, a feedback circuit 203, a comparison circuit 204, a clock generator 205, a logical circuit 206, a spectrum shaping circuit 207, and a switching circuit 208. In one embodiment, the switching circuit 208 is a switching device, which is integrated in the control chip ($IC_1$).

In one embodiment, the transformer 201 includes a primary winding 201-1, a secondary winding 201-2, and an auxiliary winding 201-3.

In one embodiment, the feedback circuit 203 includes an opto-coupler (Do), a first resistor ($R_1$), a first zener diode ($D_{Z1}$) and a second resistor ($R_2$). The opto-coupler (Do) comprises a photodiode and a phototransistor. The photodiode, the first resistor ($R_1$) and the first zener diode ($D_{Z1}$) are coupled in series between the output port of the switching mode power supply 200 and secondary side ground. The phototransistor and the second resistor ($R_2$) are coupled in series between a power supply and primary side ground. In one embodiment, the voltage across the second resistor ($R_2$) represents the feedback voltage ($V_{FB}$) that is inversely proportional to the output voltage ($V_{OUT}$) on the main secondary winding 201-2 of the transformer 201. As described in more detail below, the feedback signal ($V_{FB}$) is used by the control circuit to control the switching frequency and the spectrum shaping range of the switching mode power supply 200 as a function of the output voltage ($V_{OUT}$). In operation, the intensity of the light emitted by the photodiode is inversely proportional to the output voltage ($V_{OUT}$). As the intensity of the photodiode increases, so does the current flow through the phototransistor, which generates the feedback signal ($V_{FB}$) across the second feedback resistor ($R_2$). Therefore, the feedback signal ($V_{FB}$) is inversely proportional to the output voltage ($V_{OUT}$), *i.e.,* it increases as the output voltage ($V_{OUT}$) becomes lower and decreases as the output voltage ($V_{OUT}$) becomes higher. It should be understood, however, that in other embodiments the feedback circuit 203 and control circuit may be configured such that the feedback signal ($V_{FB}$) is proportional to the output voltage ($V_{OUT}$) or otherwise varies in relation to the output voltage ($V_{OUT}$).

In one embodiment, the control circuit includes the control chip ($I_{C1}$), the resistor ($R_S$), and a capacitor ($C_0$). As shown in Figure 3a, in one embodiment, the switching mode power supply 200 further comprises the auxiliary winding 201-3, a diode ($D_2$), a third resistor ($R_3$), and a capacitor ($C_1$), which are configured to provide power supply to the control chip ($I_{C1}$).

In one embodiment, the logical circuit 206 includes a flip-flop ($U_4$). The clock generator 205 includes a saw-tooth wave generator and a short pulse circuit ($T_{pulse}$). In one embodiment, the saw-tooth wave generator comprises a capacitor ($C_0$) which is placed at the outside of the control chip ($I_{C1}$), a current source ($I_{Ct}$), a switch ($S_3$), and a first comparator ($U_1$). The capacitor ($C_0$), the current source ($I_{Ct}$), and the switch ($S_3$) are coupled in parallel between the non-inverting input terminal of the first comparator ($U_1$) and primary side ground, respectively. The short pulse circuit ($T_{pulse}$) is coupled between the output of the first comparator ($U_1$) and the control terminal of the switch ($S_3$). When the output of the first comparator ($U_1$) is high, the switch ($S_3$) is turned on for a short time period ($T_P$).

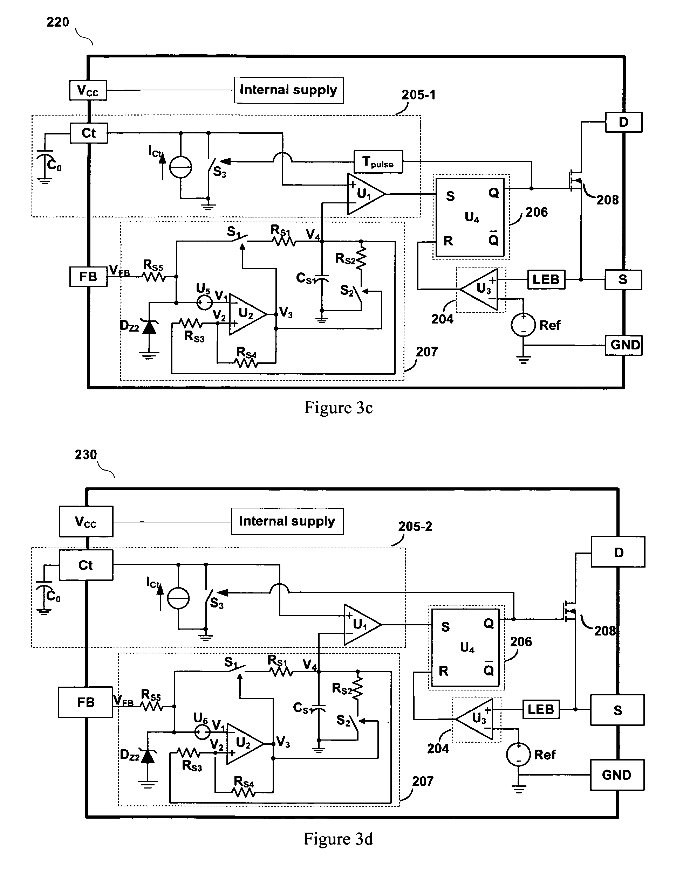

It should be understood, however, that in other embodiments the short pulse circuit ($T_{pulse)}$ may be coupled between the output of the logical circuit 206 and the control terminal of the switch ($S_3$), as shown in Figure 3c. When the output of the first comparator ($U_1$) turns high, the output of the logical circuit 206 turns high accordingly. Accordingly, the switch ($S_3$) is turned on for a short time period ($T_P$) via the short pulse circuit ($T_{pulse}$). As a result, the voltage across the capacitor ($C_0$) is reset, and the output of the first comparator ($U_1$) turns low. After the short time period ($T_P$), the switch ($S_3$) is turned off, and the capacitor ($C_0$) is re-charged until the voltage across it becomes higher than the voltage at the inverting input terminal of the first comparator ($U_1$). Then the output of the first comparator ($U_1$) is high again, the switching mode power supply enters a new cycle. The operation of the switching mode power supply is same to the previous one, which will not be illustrated for brevity.

It should be understood, however, that in other embodiments no short pulse circuit is needed, as shown in Figure 3d. That is, the clock generator 205-2 only includes a saw-tooth wave generator. The output of the logical circuit 206 is coupled to the control terminal of the switch ($S_3$) directly. When the output of the first comparator ($U_1$) turns high, the output of the logical circuit 206 turns high, which turns on the switch ($S_3$) accordingly. The switch ($S_3$) maintains on until the logical circuit 206 outputs a low-level signal.

In the embodiments that illustrated above, the capacitor ($C_0$) is placed at the outside of the control chip ($I_{C1}$). It should be understood, however, that in other embodiments the capacitor may be integrated into the control chip.

The rest parts of the circuit in Figure 3c and Figure 3d are same to those in Figure 3b. So the following detailed description is based on the circuit in Figure 3b.

In one embodiment, the current sensing circuit 202 comprises a current sense resistor ($R_S$) which is coupled between one terminal of the switching circuit 208 and ground, for sensing the current flow through the switching circuit 208. It should be understood, however, that in other embodiments the current sensing circuit may comprise a transformer sensing circuit or may use the switching circuit's on resistor to sense its own current.

In one embodiment, the comparison circuit 204 comprises a third comparator ($U_3$). The non-inverting input terminal of the third comparator ($U_3$) is coupled to the common node of the current sense resistor ($R_S$) and the switching circuit 208, for receiving the sensed current. The inverting input terminal of the third comparator ($U_3$) receives a reference signal ($R_{ef}$). The output of the third comparator ($U_3$) is coupled to the reset terminal (R) of the flip-flop ($U_4$). One skilled in the art should realize, that in order to eliminate the error caused by the reverse recovery of the body diode and the parasitic oscillation, a leading edge blanking circuit (LEB) may be coupled between the non-inverting input terminal of the third comparator ($U_3$) and the common node of the current sense resistor ($R_S$) and the switching circuit 208.

In one embodiment, the spectrum shaping circuit 207 comprises a second comparator ($U_2$), a first switch ($S_1$), a second switch ($S_2$), a bias circuit ($U_5$), a first shaping resistor ($R_{S1}$), a second shaping resistor ($R_{S2}$), a third shaping resistor ($R_{S3}$), a fourth shaping resistor ($R_{S4}$), a fifth resistor ($R_{S5}$), a shaping capacitor ($C_{S1}$) and a second zener diode ($D_{Z2}$). The feedback signal ($V_{FB}$) is sent to the spectrum shaping circuit 207 via a feedback pin (FB). That is, the input terminal of the spectrum shaping is coupled to the output terminal of the feedback circuit 203, for receiving the feedback signal ($V_{FB}$).

In one embodiment, the bias circuit ($U_5$) has a bias voltage with a voltage value of $V_{bias}$, and the second zener diode ($D_{Z2}$) has a clamp voltage of $V_{zener}$.

The shaping capacitor ($C_{S1}$) is coupled between the output of the spectrum shaping circuit 207 and primary side ground. The second shaping resistor ($R_{S2}$) and the second switch ($S_2$) are coupled in series between the output of the spectrum shaping circuit 207 and primary side ground. The first terminal of the fifth resistor ($R_{S5}$) is coupled to the feedback pin (FB), the second terminal of the fifth resistor ($R_{S5}$) is coupled to the inverting input terminal of the second

comparator ($U_2$) via the bias circuit ($U_5$) and coupled to the output of the spectrum shaping circuit 207 via the first switch ($S_1$). The second terminal of the fifth resistor ($R_{S5}$) is further coupled to the cathode of the second zener diode ($D_{Z2}$) whose anode is connected to primary side ground. When the feedback signal ($V_{FB}$) is higher than the clamp voltage ($V_{zener}$), the feedback signal ($V_{FB}$) is clamped to $V_{zener}$.

In one embodiment, the first switch ($S_1$) and the second switch ($S_2$) are turned on complementarily. They are controlled by the output signal ($V_3$) of the second comparator ($U_2$). In one embodiment, when the output signal ($V_3$) of the second comparator ($U_2$) is low, the first switch ($S_1$) is turned on, and the second switch ($S_2$) is turned off, so the shaping capacitor ($C_{S1}$) is charged. When the output signal ($V_3$) is high, the first switch ($S_1$) is turned off, and the second switch ($S_2$) is turned on, the shaping capacitor ($C_{S1}$) is discharged.

In one embodiment, the non-inverting input terminal of the second comparator ($U_2$) is coupled to the output of the spectrum shaping circuit 20 via the third shaping resistor ($R_{S3}$). The fourth shaping resistor ($R_{S4}$) is coupled between the non-inverting input terminal and the output terminal of the second comparator ($U_2$). In one embodiment, the output of the spectrum shaping circuit 207 is further coupled to the clock generator 205.

During the operation of the switching mode power supply 200, when the clock generator 205 provides a high-level signal to the set terminal of the flip-flop ($U_4$), the output of the flip-flop ($U_4$) goes high. Accordingly, the switching circuit 208 is turned on, the current flow through the primary winding 201-1 of the transformer 201 increases, so does the current sensing signal ($I_{sense}$). When the current sensing signal ($I_{sense}$) increases to be higher than the reference signal ($R_{ef}$), the comparison signal goes high. As a result, the output of the flip-flop ($U_4$) is reset to zero, and the switching circuit 208 is turned off accordingly. When the clock generator 205 provides another high-level signal, the flip-flop ($U_4$) is set again; and the switching mode power supply 200 enters another switching cycle, and operates as illustrated hereinbefore.

Every time the voltage across the capacitor ($C_0$) touches the voltage at the inverting input terminal of the first comparator ($U_1$), the switching mode power supply 200 enters a new switching cycle. So the frequency of the switching

$$f = \frac{1}{C_{C0} \times \dfrac{V_4}{I_0} + T_p},$$

mode power supply, *i.e.,* the frequency of the clock generator 205 is                         wherein $C_{C0}$ is the capacitance of the capacitor ($C_0$), $I_0$ is the current provided by the current source ($I_{Ct}$), $T_P$ is the time period of the short pulse, and $V_4$ is the output voltage of the spectrum shaping signal. For a given switching mode power supply, parameters of $C_{C0}$, $I_0$, and $T_P$ are set, so the frequency of the clock generator 205, *i.e.*, the switching frequency is determined by the spectrum shaping signal. The higher $V_4$ is, the lower the switching frequency. The lower $V_4$ is, the higher the switching frequency.

Similarly, the frequency of the clock generator 205-2 is

$$f = \frac{1}{C_{C0} \times \dfrac{V_4}{I_0} + T_{ON}},$$

wherein $C_{C0}$ is the capaci-

tance of the capacitor ($C_0$), $I_0$ is the current provided by the current source ($I_{Ct}$), $V_4$ is the output voltage of the spectrum shaping signal, and $T_{ON}$ is the duration of the logical circuit 206's high-level output, *i.e.,* the on time of the switching circuit 208 in one cycle. During this $T_{ON}$ time, the current flow through the switching circuit 208 increases, thus

$$T_{ON} = L \times \frac{\Delta I}{V_{DC}},$$

wherein L is the inductance of the magnetizing inductor of the primary winding 201-1 of the trans-

former 201, $\Delta I$ is the difference between the maximum current value and the minimum current value through the switching circuit 208 in one switching cycle, and $V_{DC}$ is the voltage of the input signal after rectification.

As illustrated hereinbefore, the output of the comparison circuit 204 turns high when the current flow through the switching circuit 208 is higher than the reference signal ($R_{ef}$). The switching circuit 208 is turned off accordingly.

Thus $\Delta I = \dfrac{V_{Ref}}{R_{RS}}$, wherein $V_{Ref}$ is the voltage of the reference signal ($R_{ef}$), $R_{RS}$ is the resistance of the current sense resistor ($R_S$). So the frequency of the clock generator 205-2 is:

$$f = \frac{1}{C_{C0} \times \dfrac{V_4}{I_0} + L \times \dfrac{V_{Ref}}{R_{RS} \times V_{DC}}} .$$

For a given switching mode power supply, parameters of $C_{C0}$, $I_0$, L, $V_{Ref}$, $R_{RS}$, and $V_{DC}$ are set. As a result, the frequency of the clock generator 205-2, *i.e.*, the switching frequency is determined by the spectrum shaping signal. The higher $V_4$ is, the lower the switching frequency. The lower $V_4$ is, the higher the switching frequency.

As described in more detail below, the spectrum shaping signal is a triangular wave.

In the spectrum shaping circuit 207, if the voltage ($V_1$) at the inverting input terminal of the second comparator ($U_2$) is higher than the voltage ($V_2$) at the non-inverting input terminal of the second comparator ($U_2$), *i.e.*, $V_1 > V_2$, the output of the second comparator ($U_2$) turns low ($V_3 = 0$). Accordingly, the first switch ($S_1$) is turned on, the second switch ($S_2$) is turned off. The shaping capacitor ($C_{S1}$) is charged by the feedback signal ($V_{FB}$) via the fifth resistor ($R_{S5}$), the first switch ($S_1$) and the first shaping resistor ($R_{S1}$). As a result, the spectrum shaping signal increases slowly. The voltage

($V_2$) at the non-inverting input terminal of the second comparator ($U_2$) is $V_2 = V_4 \times \dfrac{R_{S4}}{R_{S3} + R_{S4}}$ . Thus, the voltage

($V_2$) at the non-inverting input terminal of the second comparator ($U_2$) increases as the spectrum shaping signal increases. When it increases to be higher than the voltage ($V_1$) at the inverting input terminal of the second comparator ($U_2$), *i.e.*, $V_2 > V_1$, the output of the second comparator ($U_2$) turns high ($V_3 = V_{3H}$). Accordingly, the first switch ($S_1$) is turned off, the second switch ($S_2$) is turned on. The shaping capacitor ($C_{S1}$) is discharged via the second shaping resistor ($R_2$) and the second switch ($S_2$). Then the voltage ($V_2$) at the non-inverting input terminal of the second comparator ($U_2$) is

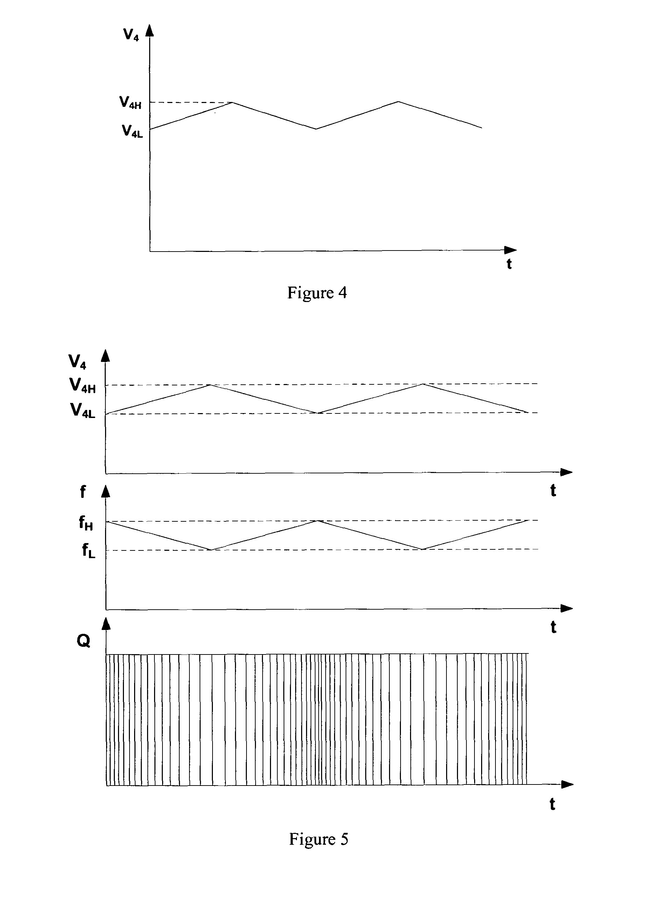

$$V_2 = V_4 \times \frac{R_{S4}}{R_{S3} + R_{S4}} + V_{3H} \times \frac{R_{S3}}{R_{S3} + R_{S4}} .$$ Thus, the voltage ($V_2$) at the non-inverting input terminal of the

second comparator ($U_2$) decreases as the spectrum shaping signal decreases. When it decreases to be lower than the voltage ($V_1$) at the inverting input terminal of the second comparator ($U_2$), *i.e.*, $V_2 < V_1$, the output of the second comparator ($U_2$) turns low again. Accordingly, the shaping capacitor ($C_{S1}$) is charged/discharged as illustrated hereinbefore. And the spectrum shaping signal is a triangular wave, as shown in Figure 4.

As shown in Figure 4, the triangular wave has a wave crest of $V_{4H} = \dfrac{R_{S3} + R_{S4}}{R_{S4}} \times \left( V_{FB} - V_{bias} \right)$ ,

the corresponding frequency of the clock generator 205, *i.e.*, the switching frequency of the switching mode power supply 200 is minimum:

$$f_L = \frac{1}{T_p + C_{C0} \times \dfrac{V_{4H}}{I_0}} = \frac{1}{T_p + C_{C0} \times \dfrac{\dfrac{R_{S3} + R_{S4}}{R_{S4}} \times \left( V_{FB} - V_{bias} \right)}{I_0}} \qquad (1)$$

In addition, the triangular wave has a wave trough of

$$V_{4L} = \frac{R_{S3} + R_{S4}}{R_{S4}} \times \left( V_{FB} - V_{bias} - V_{3H} \times \frac{R_{S3}}{R_{S3} + R_{S4}} \right),$$ the corresponding frequency of the clock generator 205, *i.e.*, the switching frequency of the switching mode power supply 200 is maximum:

$$f_H = \cfrac{1}{T_p + C_{C0} \times \cfrac{V_{4L}}{I_0}} = \cfrac{1}{T_p + C_{C0} \times \cfrac{\cfrac{R_{S3} + R_{S4}}{R_{S4}} \times (V_{FB} - V_{bias} - V_{3H} \times \cfrac{R_{S3}}{R_{S3} + R_{S4}})}{I_0}} \qquad (2)$$

The spectrum shaping signal ($V_4$), the switching frequency (f) and the control signal (Q) of the switching circuit 208 are shown in Figure 5.

From the above equation (1) and equation (2), it could be seen that, the switching frequency decreases as the feedback signal ($V_{FB}$) increases; the switching frequency increases as the feedback signal ($V_{FB}$) decreases.

Subtract equation (1) from equation (2), the spectrum shaping range is:

$$\Delta f = \cfrac{1}{T_p + C_{C0} \times \cfrac{\cfrac{R_{S3} + R_{S4}}{R_{S4}} \times \left(V_{FB} - V_{bias} - V_{3H} \times \cfrac{R_{S3}}{R_{S3} + R_{S4}}\right)}{I_0}} - \cfrac{1}{T_p + C_{C0} \times \cfrac{\cfrac{R_{S3} + R_{S4}}{R_{S4}} \times \left(V_{FB} - V_{bias}\right)}{I_0}}$$

*i.e.,*

$$\Delta f = \cfrac{C_{C0} \times \cfrac{\cfrac{R_{S3}}{R_{S4}} \times V_{3H}}{I_0}}{\left[T_p + C_{C0} \times \cfrac{\cfrac{R_{S3} + R_{S4}}{R_{S4}} \times \left(V_{FB} - V_{bias} - V_{3H} \times \cfrac{R_{S3}}{R_{S3} + R_{S4}}\right)}{I_0}\right] \times \left[T_p + C_{C0} \times \cfrac{\cfrac{R_{S3} + R_{S4}}{R_{S4}} \times \left(V_{FB} - V_{bias}\right)}{I_0}\right]} \qquad (3)$$

In one embodiment, because parameters of $C_{C0}$, $I_0$, $T_P$, $R_{S1}$, $R_{S2}$, $R_{S3}$, $R_{S4}$, $V_{bias}$, and $V_{3H}$ in equation (3) are set, the spectrum shaping range $\Delta f$ of switching mode power supply is inversely proportional to the feedback signal ($V_{FB}$). In addition, as illustrated hereinbefore, the frequency of the switching mode power supply is inversely proportional to the feedback signal ($V_{FB}$). That is, the switching mode power supply is lower, and the spectrum shaping range $\Delta f$ of switching mode power supply becomes narrower when the feedback signal ($V_{FB}$) increases; the switching mode power supply is higher, and the spectrum shaping range $\Delta f$ of switching mode power supply becomes broader when the feedback signal ($V_{FB}$) decreases.

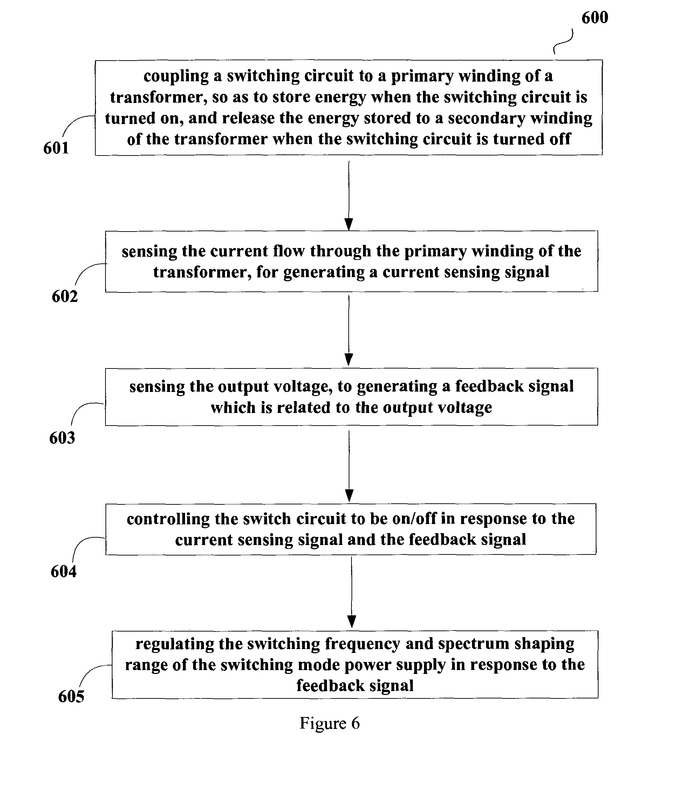

Figure 6 is a flowchart 600 in accordance with yet another embodiment of the present invention. In one embodiment, flowchart 600 comprises:

Step 601, coupling a switching circuit to a primary winding of a transformer, so as to store energy when the switching circuit is turned on, and release the energy stored to a secondary winding of the transformer when the switching circuit is turned off.

Step 602, sensing the current flow through the primary winding of the transformer, for generating a current sensing signal.

Step 603, sensing the output voltage, to generating a feedback signal which is related to the output voltage.

Step 604, controlling a switch circuit to be on/off in response to the current sensing signal and the feedback signal.

Step 605, regulating the switching frequency and spectrum shaping range of the switching mode power supply in response to the feedback signal.

In one embodiment, step 604 further comprises comparing the current sensing signal with a reference signal, and turning off the switch circuit when the current sensing signal is higher than the reference signal.

In one embodiment, step 605 further comprises: step 605-1, generating a spectrum shaping signal in response to the feedback signal; step 605-2, generating a clock signal in response to the spectrum shaping signal, so as to turn on the switch at the edge of the clock signal; step 605-3, regulating the switching frequency by regulating the frequency of the clock signal.

In one embodiment, the switching frequency decreases and the spectrum shaping range becomes narrower when the feedback signal increases; the switching frequency increases and the spectrum shaping range becomes broader when the feedback signal decreases.

This written description uses examples to disclose the invention, including the best mode, and also to enable a person skilled in the art to make and use the invention. The patentable scope of the invention may include other examples that occur to those skilled in the art.

**Claims**

1. A switching mode power supply (100), comprising:

a transformer (101) having a primary winding (101-1) and a secondary winding (101-2) to supply power to a load;
a feedback circuit (103) that generates a feedback signal ($V_{FB}$) that varies in relation to the load on the secondary winding (101-2);
a switching circuit (108) coupled to the primary winding (101-1), wherein the switching circuit (108) having a switch coupled to the primary winding (101-1) to control current flow through the primary winding (101-1); and
a control circuit coupled to the switching circuit (108), wherein the control circuit outputs a switching frequency to toggle the switch of the switching circuit (108) in response to the feedback signal ($V_{FB}$) and the current flow through the primary winding (101-1); wherein
the control circuit comprises:

a spectrum shaping circuit (107, 207), which generates a spectrum shaping signal ($S_F$) in response to the feedback signal ($V_{FB}$), wherein the switching frequency is varied within a spectrum shaping range in accordance to the spectrum shaping signal ($S_F$);
a clock generator (105, 205), for generating a clock signal (CLK) in response to the spectrum shaping signal ($S_F$), the clock generator (105, 205) comprises a capacitor ($C_0$), a current source ($I_{Ct}$), a switch ($S_3$), and a first comparator ($U_1$), wherein the capacitor ($C_0$), the current source ($I_{Ct}$), and the switch ($S_3$) of the clock generator (205) are coupled in parallel between a first input terminal of the first comparator ($U_1$) and a primary side ground, the spectrum shaping signal ($S_F$) is coupled to a second input terminal of the first comparator (U1), and the output of the first comparator ($U_1$) provides the clock signal; and
a logical circuit (106, 206), wherein one input terminal of the logical circuit (106, 206) receives a comparison signal, the other input terminal of the logical circuit (106, 206) receives the clock signal (CLK), and the logical circuit (106, 206) provides a control signal which is used to control the on/off of the switching circuit (108, 208) in response to the comparison signal and the clock signal (CLK).

2. The switching mode power supply (100) of claim 1, wherein the spectrum shaping range is broader if the switching frequency is higher; the spectrum shaping range is narrower if the switching frequency is lower.

3. The switching mode power supply (100) of claim 1, wherein the control circuit further comprises:

a current sensing circuit (102), coupled to the switching circuit (108), for generating a current sensing signal ($I_{sense}$);
a comparison circuit (104), for generating the comparison signal in response to the current sensing signal ($I_{sense}$) and a reference signal (Ref).

4. The switching mode power supply (100) of claim 1, wherein the feedback circuit (103) comprises a resistor-divided circuit or a capacitor-divided circuit.

5. The switching mode power supply (100) of claim 1, wherein the feedback circuit (203) comprises an opto-coupler ($D_0$), a first resistor ($R_1$), a second resistor ($R_2$), and a zener diode ($D_{Z1}$);
wherein the opto-coupler ($D_0$) comprises:

a photodiode coupled in series with the first resistor ($R_1$) and the first zener diode ($D_{Z1}$) between an output port ($V_{OUT}$) of the switching mode power supply (200) and secondary side ground; and
a phototransistor, coupled in series with the second resistor ($R_2$) between a power supply ($V_{cc}$) and primary side ground.

6. The switching mode power supply of claim 1, wherein the spectrum shaping signal is a triangular wave signal.

7. The switching mode power supply (100) of claim 6, wherein the spectrum shaping circuit (207) comprises a second comparator ($U_2$), a first switch ($S_1$), a second switch ($S_2$), a bias circuit ($U_5$), a first shaping resistor ($R_{S1}$), a second shaping resistor ($R_{S2}$), a third shaping resistor ($R_{S3}$), a fourth shaping resistor ($R_{S4}$), a fifth resistor ($R_{S5}$), a shaping capacitor ($C_{S1}$), and a second zener diode ($D_{Z2}$); wherein

the shaping capacitor ($C_{S1}$) is coupled between the output of the spectrum shaping circuit (207) and primary side ground;

the second shaping resistor ($R_{S2}$) and the second switch ($S_2$) are coupled in series between the output of the spectrum shaping circuit (207) and primary side ground;

the first terminal of the fifth resistor ($R_{S5}$) is coupled to the feedback circuit (103) for receiving the feedback signal ($V_{FB}$);

the second terminal of the fifth resistor ($R_{S5}$) is coupled to the inverting input of the second comparator ($U_2$) via the bias circuit ($U_5$), and coupled to primary side ground via the second zener diode ($D_{Z2}$);

the first switch ($S_1$) and the first shaping resistor ($R_{S1}$) are coupled in series between the second terminal of the fifth resistor ($R_{S5}$) and the output of the spectrum shaping circuit (207);

the third shaping resistor ($R_{S3}$) is coupled between the non-inverting input of the second comparator ($U_2$) and the output of the spectrum shaping circuit (207);

the fourth shaping resistor ($R_{S4}$) is coupled between the non-inverting input of the second comparator ($U_2$) and the output of the second comparator ($U_2$);

the first switch ($S_1$) and the second switch ($S_2$) are controlled by the output of the second comparator ($U_2$).

8. The switching mode power supply (200) of claim 7, wherein the first switch ($S_1$) and the second switch ($S_2$) are turned on complementary.

9. The switching mode power supply (200) of claim 3, wherein the comparison circuit (204) comprises a comparator ($U_3$).

10. The switching mode power supply (200) of claim 3, wherein the logical circuit (206) comprises a flip-flop ($U_4$), which includes a set input terminal receiving the clock signal and a reset input terminal receiving the comparison signal.

11. The switching mode power supply (200) of claim 3, wherein the clock generator (205) comprises a saw-tooth wave generator.

12. The switching mode power supply (200) of claim 11, wherein the clock generator further comprises a short pulse generator ($T_{pulse}$).

13. A method used in the switching mode power supply of claim 1, the method comprising:

generating, at the feedback circuit (103), the feedback signal ($V_{FB}$) that varies in relation to the load on the secondary winding (101-2);

outputting, at the control circuit, the switching frequency to toggle the switch of the switching circuit (108) in response to the feedback signal ($V_{FB}$) and the current flow through the primary winding (101-1);

generating, at the spectrum shaping circuit (107, 207), the spectrum shaping signal ($S_F$) in response to the feedback signal ($V_{FB}$), wherein the switching frequency is varied within a spectrum shaping range in accordance to the spectrum shaping signal ($S_F$);

generating, at the clock generator (105, 205), the clock signal (CLK) in response to the spectrum shaping signal ($S_F$);

providing, at the logical circuit (106, 206), a control signal which is used to control the on/off of the switching circuit (108, 208) in response to the comparison signal received at one input terminal of the logical circuit (106, 206) and the clock signal (CLK) received at the other input terminal of the logical circuit (106, 206).

14. The method of claim 13, further comprising:

coupling the switching circuit (108) to the primary winding (101-1) of the transformer (101) so as to store energy when the switching circuit (108) is turned on, and release the energy stored to the secondary winding (101-2) of the transformer (101) when the switching circuit (108) is turned off;

sensing the current flow through the primary winding (101-1) of the transformer (101), for generating a current sensing signal ($I_{sense}$);

sensing an output voltage ($V_{OUT}$) on the secondary winding (101-2) of the transformer (101) for generating the feedback signal ($V_{FB}$) which is related to the output voltage ($V_{OUT}$);

toggling the switch circuit (108) at the switching frequency in accordance with the current sensing signal ($I_{sense}$)

and the feedback signal ($V_{FB}$).

**15.** The method of claim 14, further comprising comparing the current sensing signal ($I_{sense}$) with a reference signal (Ref), and turning off the switching circuit (108) when the current sensing signal ($I_{sense}$) is higher than the reference signal (Ref).

**16.** The method of claim 14, further comprising regulating the switching frequency by regulating the frequency of the clock signal.

**17.** The method of claim 14, wherein the switching frequency decreases and the spectrum shaping range becomes narrower when the feedback signal ($V_{FB}$) increases; the switching frequency increases and the spectrum shaping range becomes broader when the feedback signal ($V_{FB}$) decreases.

**Patentansprüche**

**1.** Schaltmodus-Energieversorgung (100), umfassend:

einen Transformator (101) mit einer Primärwicklung (101-1) und einer Sekundärwicklung (101-2), um einer Last Energie bereitzustellen;
einen Rückkopplungsschaltkreis (103), der ein Rückkopplungssignal ($V_{FB}$) erzeugt, das im Verhältnis zur Last auf der Primärwicklung (101-2) variiert;
einen Schaltkreis (108), der mit der Primärwicklung (101-1) gekoppelt ist, worin der Schaltkreis (108) einen Schalter aufweist, der mit der Primärwicklung (101-1) gekoppelt ist, um den Stromfluss durch die Primärwicklung (101-1) zu steuern; sowie
einen Steuerschaltkreis, der mit dem Schaltkreis (108) gekoppelt ist, worin der Steuerschaltkreis eine Schaltfrequenz ausgibt, um den Schalter des Schaltkreises (108) in Reaktion auf das Rückkopplungssignal ($V_{FB}$) und den Stromfluss durch die Primärwicklung (101-1) umzuschalten; worin
der Steuerschaltkreis umfasst:

einen spektrumformenden Schaltkreis (107, 207), der ein spektrumformendes Signal ($S_F$) in Reaktion auf das Rückkopplungssignal ($V_{FB}$) erzeugt, worin die Schaltfrequenz innerhalb eines Spektrumformungsbereichs gemäß des spektrumformenden Signals ($S_F$) variiert wird;
einen Taktgenerator (105, 205) zum Erzeugen eines Taktsignals (CLK) in Reaktion auf das spektrumformende Signal ($S_F$), wobei der Taktgenerator (105, 205) einen Kondensator ($C_0$), eine Stromquelle ($I_{Ct}$), einen Schalter ($S_3$) und einen ersten Komparator ($U_1$) umfasst, worin der Kondensator ($C_0$), die Stromquelle ($I_{Ct}$) und der Schalter ($S_3$) des Taktgenerators parallel zwischen einem ersten Eingangsanschluss des ersten Komparators ($U_1$) und einer primärseitigen Masse gekoppelt sind, das spektrumformende Signal ($S_F$) mit einem zweiten Eingangsanschluss des ersten Komparators ($U_1$) gekoppelt ist und der Ausgang des ersten Komparators ($U_1$) das Taktsignal bereitstellt; sowie
einen Logikschaltkreis (106, 206), worin ein Eingangsanschluss des Logikschaltkreises (106, 206) ein Vergleichssignal empfängt, der andere Eingangsanschluss des Logikschaltkreises (106, 206) das Taktsignal (CLK) empfängt und der Logikchaltkreis (106, 206) ein Steuersignal bereitstellt, das dazu verwendet wird, um das Ein/Aus-Schalten des Schaltkreises (108, 208) in Reaktion auf das Vergleichssignal und das Taktsignal (CLK) zu steuern.

**2.** Schaltmodus-Energieversorgung (100) nach Anspruch 1, worin der Spektrumformungsbereich breiter ist, wenn die Schaltfrequenz höher ist; der Spektrumformungsbereich schmaler ist, wenn die Schaltfrequenz niedriger ist.

**3.** Schaltmodus-Energieversorgung (100) nach Anspruch 1, worin der Steuerschaltkreis ferner umfasst:

einen stromabfühlenden Schaltkreis (102), der mit dem Schaltkreis (108) gekoppelt ist, um ein Stromabfühlsignal ($I_{sense}$) zu erzeugen;
einen Vergleichsschaltkreis (104), um das Vergleichssignal in Reaktion auf das Stromabfühlsignal ($I_{sense}$) sowie ein Referenzsignal (Ref) zu erzeugen.

**4.** Schaltmodus-Energieversorgung (100) nach Anspruch 1, worin der Rückkopplungsschaltkreis (103) einen widerstandsgeteilten Schaltkreis oder einen kondensatorgeteilten Schaltkreis umfasst.

**5.** Schaltmodus-Energieversorgung (100) nach Anspruch 1, worin der Rückkopplungsschaltkreis (203) einen Optokoppler ($D_0$), einen ersten Widerstand ($R_1$), einen zweiten Widerstand ($R_2$) sowie eine Zener-Diode ($D_{Z1}$) umfasst; worin der Optokoppler ($D_0$) folgende Elemente umfasst:

eine Fotodiode, die mit dem ersten Widerstand ($R_1$) und der ersten Zenerdiode ($D_{Z1}$) zwischen einem Ausgangskontakt ($V_{OUT}$) der Schaltmodus-Energieversorgung (200) und einer sekundärseitigen Masse in Reihe gekoppelt ist; und
einen Fototransistor, der mit dem zweiten Widerstand ($R_2$) zwischen einer Energieversorgung ($V_{cc}$) und der primärseitigen Masse in Reihe gekoppelt ist.

**6.** Schaltmodus-Energieversorgung (100) nach Anspruch 1, worin das spektrumformende Signal ein dreieckiges Wellensignal ist.

**7.** Schaltmodus-Energieversorgung (100) nach Anspruch 6, worin der spektrumformende Schaltkreis (207) einen zweiten Komparator ($U_2$), einen ersten Schalter ($S_1$), einen zweiten Schalter ($S_2$), einen Vorspannungsschaltkreis ($U_5$), einen ersten formenden Widerstand ($R_{S1}$), einen zweiten formenden Widerstand ($R_{S2}$), einen dritten formenden Widerstand ($R_{S3}$), einen vierten formenden Widerstand ($R_{S4}$), einen fünften formenden Widerstand ($R_{S5}$), einen formenden Kondensator ($C_{S1}$) und eine zweite Zener-Diode ($D_{Z2}$) umfasst, worin der formende Kondensator ($C_{S1}$) zwischen dem Ausgang des spektrumformenden Schaltkreises (207) und der primärseitigen Masse gekoppelt ist;
der zweite formende Widerstand ($R_{S2}$) und der zweite Schalter ($S_2$) zwischen dem Ausgang des spektrumformenden Schaltkreises (207) und der primärseitigen Masse in Reihe gekoppelt sind;
der erste Anschluss des fünften Widerstandes ($R_{S5}$) mit dem Rückkopplungsschaltkreis (103) zum Empfangen des Rückkopplungssignals ($V_{FB}$) gekoppelt ist;
der zweite Anschluss des fünften Widerstandes ($R_{S5}$) mit dem invertierenden Eingang des zweiten Komparators ($U_2$) über den Vorspannungsschaltkreis ($U_5$) gekoppelt ist und mit der primärseitigen Masse über die zweite Zener-Diode ($D_{Z2}$) gekoppelt ist;
der erste Schalter ($S_1$) und der erste formende Widerstand ($R_{S1}$) zwischen dem zweiten Anschluss des fünften Widerstandes ($R_{S5}$) und dem Ausgang des spektrumformenden Schaltkreises (207) in Reihe gekoppelt sind;
der dritte formende Widerstand ($R_{S3}$) zwischen dem nichtinvertierenden Eingang des des zweiten Komparators ($U_2$) und dem Ausgang des spektrumformenden Schaltkreises (207) gekoppelt ist;
der vierte formende Widerstand ($R_{S4}$) zwischen dem nichtinvertierenden Eingang des zweiten Komparators ($U_2$) und dem Ausgang des zweiten Komparators ($U_2$) gekoppelt ist;
der erste Schalter ($S_1$) und der zweite Schalter ($S_2$) vom Ausgang des zweiten Komparators ($U_2$) gesteuert werden.

**8.** Schaltmodus-Energieversorgung (200) nach Anspruch 7 , worin der erste Schalter ($S_1$) und der zweite Schalter ($S_2$) komplementär eingeschaltet werden.

**9.** Schaltmodus-Energieversorgung (200) nach Anspruch 3, worin der Vergleichsschaltkreis (204) einen Komparator ($U_3$) umfasst.

**10.** Schaltmodus-Energieversorgung (200) nach Anspruch 3, worin der Logikschaltkreis (206) einen Flipflop ($U_4$) umfasst, der einen eingestellten Eingangsanschluss, der das Taktsignal empfängt, und einen Rücksetzungs-Eingangsanschluss umfasst, der das Vergleichssignal empfängt.

**11.** Schaltmodus-Energieversorgung (200) nach Anspruch 3, worin der Taktgenerator (205) einen Sägezahn-Wellengenerator umfasst.

**12.** Schaltmodus-Energieversorgung (200) nach Anspruch 11, worin der Taktgenerator ferner einen Kurzimpulsgenerator ($T_{pulse}$) umfasst.

**13.** Verfahren, das in der Schaltmodus-Energieversorgung nach Anspruch 1 verwendet wird, wobei das Verfahren umfasst:

das Erzeugen des Rückkopplungssignals ($V_{FB}$) im Rückkopplungsschaltkreis (103), das im Verhältnis zur Last auf der Sekundärwicklung (101-2) variiert;
das Ausgeben der Schaltfrequenz im Steuerschaltkreis, um den Schalter des Schaltkreises (108) in Reaktion auf das Rückkopplungssignal ($V_{FB}$) und den Stromfluss durch die Primärwicklung (101-1) umzuschalten;

das Erzeugen des spektrumformenden Signals ($S_F$) im spektrumformenden Schaltkreis (107, 207) in Reaktion auf das Rückkopplungssignal ($V_{FB}$), worin die Schaltfrequenz gemäß dem spektrumformenden Signal ($S_F$) innerhalb eines Spektrumformungsbereiches variiert wird;

das Erzeugen des Taktsignals (CLK) im Taktgenerator (105, 205) in Reaktion auf das spektrumformende Signal ($S_F$);

das Bereitstellen eines Steuersignals im Logikschaltkreis (106, 206), das dazu verwendet wird, um das Ein-/Ausschalten des Schaltkreises (108, 208) in Reaktion auf das an einem Eingangsanschluss des Logikschaltkreises (106, 206) empfangene Vergleichssignal und das am anderen Eingangsanschluss des Logikschaltkreises (106, 206) empfangene Taktsignal (CLK) zu steuern.

14. Verfahren nach Anspruch 13, ferner umfassend:

das Koppeln des Schaltkreises (108) mit der Primärwicklung (101-1) des Transformators (101), um Energie zu speichern, wenn der Schaltkreis (108) eingeschaltet wird, und die gespeicherte Energie an die Sekundärwindung (101-2) des Transformators (101) weiterzugeben, wenn der Schaltkreis (108) ausgeschaltet wird;

das Abfühlen des Stromflusses durch die Primärwicklung (101-1) des Transformators (101), um ein Stromabfühlsignal ($I_{sense}$) zu erzeugen;

das Abfühlen einer Ausgangsspannung ($V_{OUT}$) an der Sekundärwicklung (101-2) des Transformators (101), um das Rückkopplungssignal ($V_{FB}$) zu erzeugen, das im Verhältnis zur Ausgangsspannung ($V_{OUT}$) steht;

das Umschalten des Schaltkreises (108) mit der Schaltfrequenz gemäß dem Stromabfühlsignal ($I_{sense}$) und dem Rückkopplungssignal ($V_{FB}$).

15. Verfahren nach Anspruch 14, welches ferner das Vergleichen des Stromabfühlsignals ($I_{sense}$) mit einem Referenzsignal (Ref) sowie das Ausschalten des Schaltkreises (108) umfasst, wenn das Stromabfühlsignal ($I_{sense}$) höher als das Referenzsignal (REF) ist.

16. Verfahren nach Anspruch 14, welches ferner das Steuern der Schaltfrequenz durch das Steuern der Frequenz des Taktsignals umfasst.

17. Verfahren nach Anspruch 14, worin die Schaltfrequenz abnimmt, und der Spektrumformungsbereich schmaler wird, wenn das Rückkopplungssignal ($V_{FB}$) ansteigt; die Schaltfrequenz ansteigt und der Spektrumformungsbereich breiter wird, wenn das Rückkopplungssignal ($V_{FB}$) abnimmt.

## Revendications

1. Alimentation à découpage (100), comprenant :

un transformateur (101) comportant un enroulement primaire (101-1) et un enroulement secondaire (101-2) pour fournir une puissance à une charge ;

un circuit de rétroaction (103) qui génère un signal de rétroaction ($V_{FB}$) qui varie en relation avec la charge sur l'enroulement secondaire (101-2) ;

un circuit de commutation (108) couplé à l'enroulement primaire (101-1), dans laquelle le circuit de commutation (108) comporte un commutateur couplé à l'enroulement primaire (101-1) pour commander la circulation de courant à travers l'enroulement primaire (101-1) ; et

un circuit de commande couplé au circuit de commutation (108), dans laquelle le circuit de commande délivre une fréquence de commutation pour basculer le commutateur du circuit de commutation (108) en réponse au signal de rétroaction ($V_{FB}$) et à la circulation de courant à travers l'enroulement primaire (101-1) ; dans laquelle le circuit de commande comprend :

un circuit de mise en forme de spectre (107, 207), qui génère un signal de mise en forme de spectre ($S_F$) en réponse au signal de rétroaction ($V_{FB}$), dans laquelle la fréquence de commutation est modifiée dans une plage de mise en forme de spectre conformément au signal de mise en forme de spectre ($S_F$) ;

un générateur d'horloge (105, 205), pour générer un signal d'horloge (CLK) en réponse au signal de mise en forme de spectre ($S_F$), le générateur d'horloge (105, 205) comprend un condensateur ($C_0$), une source de courant ($I_{Ct}$), un commutateur ($S_3$) et un premier comparateur ($U_1$), dans laquelle le condensateur ($C_0$), la source de courant ($I_{Ct}$) et le commutateur ($S_3$) du générateur d'horloge (205) sont couplés en parallèle entre une première borne d'entrée du premier comparateur ($U_1$) et une masse côté primaire, le signal de mise en forme de spectre ($S_F$) est couplé à une deuxième borne d'entrée du premier comparateur ($U_1$), et la sortie du premier comparateur ($U_1$) fournit le signal d'horloge ; et

un circuit logique (106, 206), dans laquelle une borne d'entrée du circuit logique (106, 206) reçoit un signal de comparaison, l'autre borne d'entrée du circuit logique (106, 206) reçoit le signal d'horloge (CLK), et le circuit logique (106, 206) fournit un signal de commande qui est utilisé pour commander la fermeture et l'ouverture du circuit de commutation (108, 208) en réponse au signal de comparaison et au signal d'horloge (CLK).

**2.** Alimentation à découpage (100) selon la revendication 1, dans laquelle la plage de mise en forme de spectre est plus large si la fréquence de commutation est plus élevée ; la plage de mise en forme de spectre est plus étroite si la fréquence de commutation est plus faible.

**3.** Alimentation à découpage (100) selon la revendication 1, dans laquelle le circuit de commande comprend en outre :

un circuit de détection de courant (102), couplé au circuit de commutation (108), pour générer un signal de détection de courant ($I_{sense}$) ;

un circuit de comparaison (104), pour générer le signal de comparaison en réponse au signal de détection de courant ($I_{sense}$) et à un signal de référence (Ref).

**4.** Alimentation à découpage (100) selon la revendication 1, dans laquelle le circuit de rétroaction (103) comprend un circuit de division à résistances ou un circuit de division à condensateurs.

**5.** Alimentation à découpage (100) selon la revendication 1, dans laquelle le circuit de rétroaction (203) comprend un opto-coupleur ($D_0$), une première résistance ($R_1$), une deuxième résistance ($R_2$), et une diode Zener ($D_{Z1}$) ; dans laquelle l'opto-coupleur ($D_0$) comprend :

une photodiode couplée en série avec la première résistance ($R_1$) et la première diode Zener ($D_{Z1}$) entre un port de sortie ($V_{OUT}$) de l'alimentation à découpage (200) et la masse côté secondaire ; et

un phototransistor, couplé en série avec la deuxième résistance ($R_2$) entre une alimentation ($V_{cc}$) et la masse côté primaire.

**6.** Alimentation à découpage selon la revendication 1, dans laquelle le signal de mise en forme de spectre est un signal d'onde triangulaire.

**7.** Alimentation à découpage (100) selon la revendication 6, dans laquelle le circuit de mise en forme de spectre (207) comprend un deuxième comparateur ($U_2$), un premier commutateur ($S_1$), un deuxième commutateur ($S_2$), un circuit de polarisation ($U_5$), une première résistance de mise en forme ($R_{S1}$), une deuxième résistance de mise en forme ($R_{S2}$), une troisième résistance de mise en forme ($R_{S3}$), une quatrième résistance de mise en forme ($R_{S4}$), une cinquième résistance ($R_{S5}$), un condensateur de mise en forme ($C_{S1}$), et une deuxième diode Zener ($D_{Z2}$) ; dans laquelle

le condensateur de mise en forme ($C_{S1}$) est couplé entre la sortie du circuit de mise en forme de spectre (207) et la masse côté primaire ;

la deuxième résistance de mise en forme ($R_{S2}$) et le deuxième commutateur ($S_2$) sont couplés en série entre la sortie du circuit de mise en forme de spectre (207) et la masse côté primaire ;

la première borne de la cinquième résistance ($R_{S5}$) est couplée au circuit de rétroaction (103) pour recevoir le signal de rétroaction ($V_{FB}$) ;

la deuxième borne de la cinquième résistance ($R_{S5}$) est couplée à l'entrée inverseuse du deuxième comparateur ($U_2$) par l'intermédiaire du circuit de polarisation ($U_5$), et couplée à la masse côté primaire par l'intermédiaire de la deuxième diode Zener ($D_{Z2}$);

le premier commutateur ($S_1$) et la première résistance de mise en forme ($R_{S1}$) sont couplés en série entre la deuxième borne de la cinquième résistance ($R_{S5}$) et la sortie du circuit de mise en forme de spectre (207) ;

la troisième résistance de mise en forme ($R_{S3}$) est couplée entre l'entrée non inverseuse du deuxième comparateur ($U_2$) et la sortie du circuit de mise en forme de spectre (207) ;

la quatrième résistance de mise en forme ($R_{S4}$) est couplée entre l'entrée non inverseuse du deuxième comparateur ($U_2$) et la sortie du deuxième comparateur ($U_2$) ;

le premier commutateur ($S_1$) et le deuxième commutateur ($S_2$) sont commandés par la sortie du deuxième comparateur ($U_2$).

**EP 2 323 244 B1**

8. Alimentation à découpage (200) selon la revendication 7, dans laquelle le premier commutateur ($S_1$) et le deuxième commutateur ($S_2$) sont fermés de manière complémentaire.

9. Alimentation à découpage (200) selon la revendication 3, dans laquelle le circuit de comparaison (204) comprend un comparateur ($U_3$).

10. Alimentation à découpage (200) selon la revendication 3, dans laquelle le circuit logique (206) comprend une bascule bistable ($U_4$), qui comprend une borne d'entrée de positionnement recevant le signal d'horloge et une borne d'entrée de réinitialisation recevant le signal de comparaison.

11. Alimentation à découpage (200) selon la revendication 3, dans laquelle le générateur d'horloge (205) comprend un générateur d'onde en dents de scie.

12. Alimentation à découpage (200) selon la revendication 11, dans laquelle le générateur d'horloge comprend en outre un générateur de courtes impulsions ($T_{pulse}$).

13. Procédé utilisé dans l'alimentation à découpage selon la revendication 1, le procédé comprenant :

la génération, au niveau du circuit de rétroaction (103), du signal de rétroaction ($V_{FB}$) qui varie en relation avec la charge sur l'enroulement secondaire (101-2) ;
la sortie, au niveau du circuit de commande, de la fréquence de commutation pour basculer le commutateur du circuit de commutation (108) en réponse au signal de rétroaction ($V_{FB}$) et à la circulation de courant à travers l'enroulement primaire (101-1) ;
la génération, au niveau du circuit de mise en forme de spectre (107, 207), du signal de mise en forme de spectre ($S_F$) en réponse au signal de rétroaction ($V_{FB}$), dans lequel la fréquence de commutation est modifiée dans une plage de mise en forme de spectre conformément au signal de mise en forme de spectre ($S_F$) ;
la génération, au niveau du générateur d'horloge (105, 205), du signal d'horloge (CLK) en réponse au signal de mise en forme de spectre ($S_F$) ;
la fourniture, au niveau du circuit logique (106, 206), d'un signal de commande qui est utilisé pour commander la fermeture et l'ouverture du circuit de commutation (108, 208) en réponse au signal de comparaison reçu au niveau d'une borne d'entrée du circuit logique (106, 206) et au signal d'horloge (CLK) reçu au niveau de l'autre borne d'entrée du circuit logique (106, 206).

14. Procédé selon la revendication 13, comprenant en outre :

le couplage du circuit de commutation (108) à l'enroulement primaire (101-1) du transformateur (101) de manière à stocker l'énergie lorsque le circuit de commutation (108) est fermé, et pour libérer l'énergie stockée vers l'enroulement secondaire (101-2) du transformateur (101) lorsque le circuit de commutation (108) est ouvert ;
la détection de la circulation de courant à travers l'enroulement primaire (101-1) du transformateur (101), pour générer un signal de détection de courant ($I_{sense}$) ;
la détection d'une tension de sortie ($V_{OUT}$) sur l'enroulement secondaire (101-2) du transformateur (101) pour générer le signal de rétroaction ($V_{FB}$) qui est lié à la tension de sortie ($V_{OUT}$) ;
le basculement du circuit de commutation (108) à la fréquence de commutation conformément au signal de détection de courant ($I_{sense}$) et au signal de rétroaction ($V_{FB}$).

15. Procédé selon la revendication 14, comprenant en outre la comparaison du signal de détection de courant ($I_{sense}$) avec un signal de référence (Ref), et l'ouverture du circuit de commutation (108) lorsque le signal de détection de courant ($I_{sense}$) est plus grand que le signal de référence (Ref).

16. Procédé selon la revendication 14, comprenant en outre la régulation de la fréquence de commutation en régulant la fréquence du signal d'horloge.

17. Procédé selon la revendication 14, dans lequel la fréquence de commutation diminue et la plage de mise en forme de spectre devient plus étroite lorsque le signal de rétroaction ($V_{FB}$) augmente ; la fréquence de commutation augmente et la plage de mise en forme de spectre devient plus large lorsque le signal de rétroaction ($V_{FB}$) diminue.

Figure 1

Figure 2

Figure 3a

Figure 3b

18

Figure 3c

Figure 3d

Figure 4

Figure 5

**600**

601 ⎯ | coupling a switching circuit to a primary winding of a transformer, so as to store energy when the switching circuit is turned on, and release the energy stored to a secondary winding of the transformer when the switching circuit is turned off |

602 ⎯ | sensing the current flow through the primary winding of the transformer, for generating a current sensing signal |

603 ⎯ | sensing the output voltage, to generating a feedback signal which is related to the output voltage |

604 ⎯ | controlling the switch circuit to be on/off in response to the current sensing signal and the feedback signal |

605 ⎯ | regulating the switching frequency and spectrum shaping range of the switching mode power supply in response to the feedback signal |

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910309569
- US 20080309303 A1
- US 20070133234 A1
- US 20080224678 A1
- US 20050110473 A1
- US 6204649 B1